# EUROPEAN PATENT SPECIFICATION

(11) **EP 3 168 447 B1**
(45) Date of publication and mention of the grant of the patent: **29.01.2020**
(21) Application number: 16198545.2
(22) Date of filing: 11.11.2016
(51) Int. Cl.: F02D 41/00, F02B 37/00, F02B 37/007, F02B 37/14, F02B 37/18, F02B 37/02

(54) **SUPERCHARGED INTERNAL COMBUSTION ENGINE AND METHOD FOR CONTROLLING THE SAME**
TURBOVERBRENNUNGSMOTOR UND VERFAHREN ZUR STEUERUNG DAVON
MOTEUR À COMBUSTION INTERNE SURALIMENTÉ ET SON PROCÉDÉ DE COMMANDE

(30) Priority: 11.11.2015 IT UB20155440
(43) Date of publication of application: 17.05.2017
(73) Proprietor: FPT Industrial S.p.A., 10156 Torino (IT)
(72) Inventor: D'EPIRO, Clino, 10091 ALPIGNANO (IT)
(74) Representative: Fiume, Orazio

(56) References cited:
- EP-A1- 1 645 735
- EP-A1- 2 503 126
- EP-A1- 2 503 127

## Description

### Technical field of the invention

The invention relates to the field of internal combustion engines, for example Diesel cycle or Otto cycle engines, and to a method for controlling the same.

### State of the art

For a long time, the so-called cylinder deactivation technique has been known, which involves cutting off some of the cylinders of an internal combustion engine, so as to offer a greater load to the active cylinders, thus saving fuel but with the same power delivered.

Depending on the type of implementation, this can lead to simple operations to be carried out on the supply, but also to actual changes in the way in which the valves are controlled, so as to forbid the circulation of air through the deactivated cylinders.

When two groups of cylinders have respective and independent supercharging stages, the activation of a second group of cylinders suffers from the so-called "turbolag", i.e. the delay with which the delivered torque adjusts to the requested torque, due to the inertia of the turbocompressor.

Solutions to avoid the turbo-lag using two supercharging stages in parallel are disclosed in documents EP2503127A1 and EP16645735A1.

### Summary of the invention

The object of the invention is to solve the turbolag problem consequent the activation of a deactivated group of cylinders.

In the description below, a first group of cylinders and a second group of cylinders are mentioned, even if one of said first or second group comprises one single cylinder. However, the two groups preferably have the same number of cylinders, e.g. 2+2, 3+3, etc.

Each group of cylinders has at least one turbocompressor supercharging stage, which is separate from and independent of the other group of cylinders.

The idea on which the invention is based is not only that of using the controlled deactivation of a second group of cylinders, but also that of changing the calibration of the trubocompressors and of interconnecting them so as to improve the overall dynamic performances of the engine. Hence, the first group of cylinders is associated with a first turbocompressor, whereas the second group of cylinders is associated with at least one second trubocompressor, wherein the first turbocompressor is calibrated to offer an optimal boost when the vehicle is at the cruise speed.

Furthermore, said first turbocompressor of the first group of cylinders comprises bypass means with a Wastegate valve, which, instead of connecting a point downstream of the turbine of the relative turbocompressor of the first group of cylinders to a point upstream of the same turbine, as provided for by the prior art, connect a point downstream of said turbine to one or more turbines of the second group of cylinders.

This connection to the turbine or turbines of the second group of cylinders is made so as to assist the start-up thereof. According to the invention, there are provided at least two possible alternatives.

According to a first alternative, said bypass means are connected downstream of the turbine or turbines of the second group of cylinders according to an ejection device, which generates a depression downstream of said turbines, thus assisting them in the relative start-up.

According to a second alternative, at least one of the turbines of the second group of cylinders is an asymmetrical twin-scroll turbine, with the bypass means connected to the smaller scroll, which means that the bypass means are connected upstream of the asymmetrical twin-scroll turbine.

Obviously, the first group of cylinders has an intake manifold and an exhaust manifold, which are respectively separate from the intake manifold and from the exhaust manifold of the second group of cylinders.

Since, at a constant cruise speed, which ranges from 90 to 130 km/h, the power supplied by the engine is approximately 1/3 of the nominal power, this implies not only doubling the load on said first group of cylinders, relative to a conventional engine, but also having optimized said first group of cylinders so as to consume as little as possible in those operating conditions.

The engine is preferably provided with one single and common drive shaft, to which the pistons of the first and second group of cylinders are connected, so that, when the two groups are both active, the Diesel or Otto thermodynamic cycles are alternately divided between the two groups of cylinders. This implies obtaining the burning of the mixture alternately between the two groups of cylinders.

According to the invention, the first group of cylinders is always active, whereas the second group of cylinders is activated only when a greater power is requested. According to a preferred variant of the invention, the engine comprises first recirculation means, which connect a point downstream of the first turbine of the first group of cylinders to the intake manifold of the second group of cylinders and said recirculation means are active when the second group of cylinders is deactivated, so as to prevent fresh air from reaching, flowing through the second group of cylinders, the exhaust gas after-treatment system (ATS), thus cooling it down and worsening the efficiency, especially if the engine is a Diesel cycle engine. Preferably, the first group of cylinders has a first compression ratio, which is greater than the compression ratio of the second group of cylinders, whereas, preferably, the first group of cylinders has a fuel injection timing advance that is lower than the fuel injection timing advance of the second group of cylinders.

Furthermore, preferably, the first turbocompressor of the first group of cylinders is calibrated so that the relative boost is smaller relative to the second (or third) turbocompressor of the second group of cylinders, so as make sure that the peak combustion pressure - PCP is not exceeded.

The first group of cylinders, with a greater compression ratio, ensures high efficiency at small loads and, therefore, according to the invention, it is always used, especially alone during a cruise at a constant speed.

On the contrary, the second group of cylinders preferably has a smaller compression ratio and a higher fuel injection timing advance, thus ensuring greater efficiency at high loads, namely during the acceleration phases of the vehicle, when the second group of cylinders is asked to deliver power as well.

Advantageously, during transient phases, i.e. during the accelerations of the vehicle, the second group of cylinders, working with a higher injection timing advance, ensures a better mixing between air and fuel; therefore, the temperature cycle turns out to be lower with a smaller production of NOx.

According to a further preferred embodiment of the invention, the first group of cylinders supplies a power turbine, i.e. a turbine that is mechanically connected to the drive shaft of the engine, whereas the second group of cylinders is associated with at least one first supercharging stage of the turbocompressor type and, if necessary, with a second supercharging stage, always of the turbocompressor type.

According to another preferred embodiment of the invention, deriving from the previous one, the first group of cylinders, besides supplying a power turbine, also comprises a supercharging stage of the turbocompressor type.

According to a further preferred variant of the invention, regardless - or not - of the presence of the power turbine and of the aforesaid recirculation means, the supercharging stage of the first group of cylinders comprises a wastegate valve to bypass the relative turbine, but exhaust gases, rather than being directly directed towards the ATS, are directed towards a turbine of the first stage, if different supercharging stages are available, of the second group of cylinders, so as to help said stage to reduce its transients, thus improving the dynamic reaction of the second group of cylinders.

Preferably, the valve control system is shared by both groups of cylinders, even if the opening and/or closing angles of the first group of valves, belonging to the first group of cylinders, can be different from the second group of valves belonging to the second group of cylinders.

It is a subject of the invention a supercharged internal combustion engine according to claim 1.

Another subject of the invention is a method for controlling the internal combustion engine.

A further subject of the invention is a terrestrial vehicle or a fixed installation implementing said supercharged internal combustion engine.

The claims describe preferred embodiments of the invention.

### Brief description of the figures

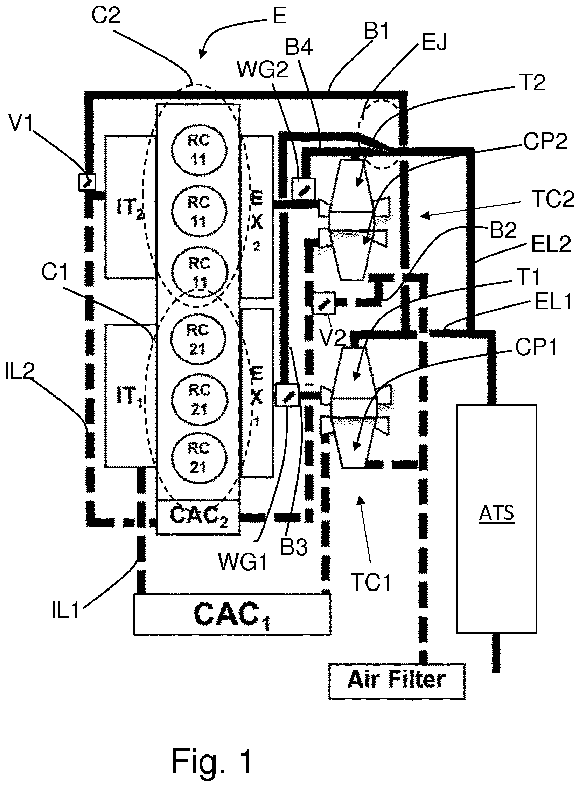

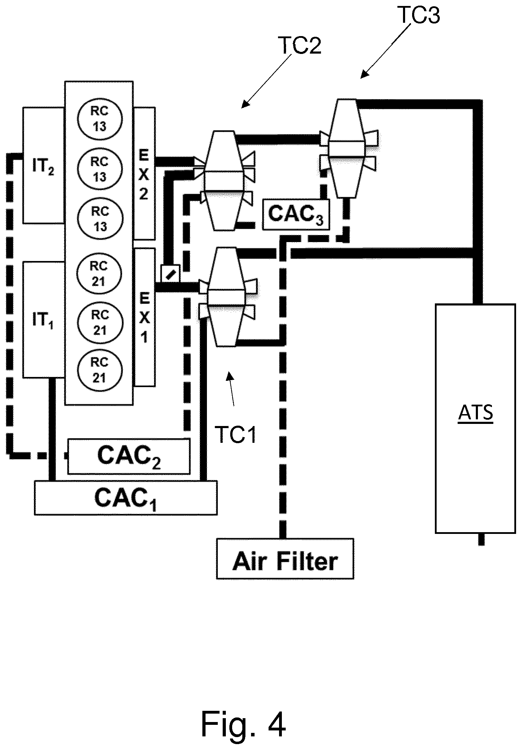

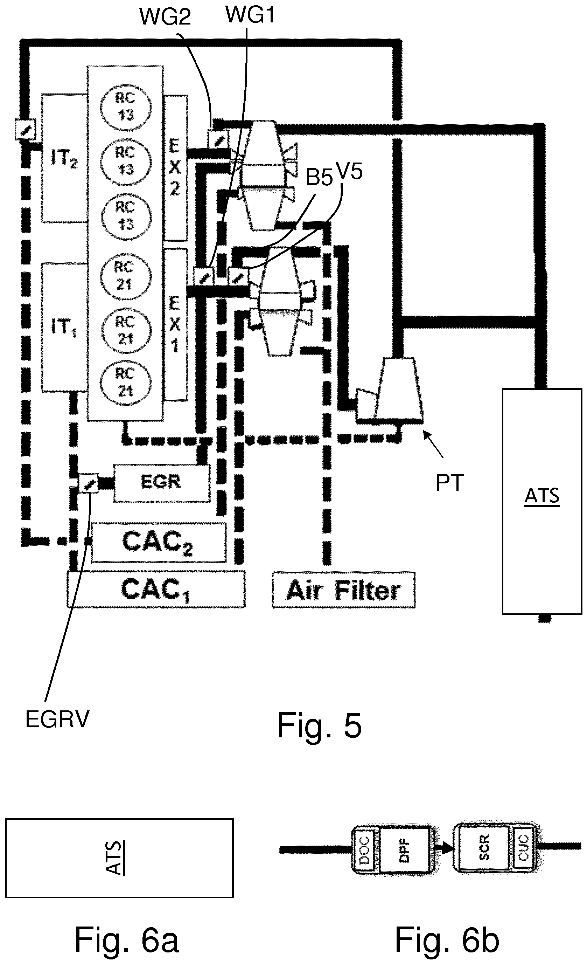

Further objects and advantages of the invention will be best understood upon perusal of the following detailed description of an embodiment thereof (and of relative variants) with reference to the accompanying drawings merely showing non-limiting examples, wherein figures 1 -5 and 7 show preferred diagrams implementing preferred variants of the invention, whereas figures 6a and 6b show some components that are typically implemented in the devices used to reduce pollutants in exhaust gases of Diesel engines.

In the figures, the same numbers and the same reference letters indicate the same elements or components.

### Detailed description of embodiments

According to the invention, an internal combustion engine E comprises a plurality of cylinders C1, C2 with relative pistons, which are connected to a relative common drive shaft (not shown). The multitude of cylinders is divided into a first group C1 and a second group of cylinders C2, in which consecutive ignition cycles alternate between the two groups of cylinders. By so doing, there is always the ignition of a cylinder belonging to the first group C1 followed, immediately after, by the ignition of a cylinder belonging to the second group C2 and then another cylinder belonging to the first group C1, etc..

The first group of cylinders has an intake manifold and an exhaust manifold, which are respectively separate from the intake manifold and from the exhaust manifold of the second group of cylinders.

The first group of cylinders is controlled to be always active, whereas the second group of cylinders is controlled to be active on-demand.

The first group of cylinders is associated with a first turbocompressor TC1, preferably a single one, whereas the second group of cylinders is associated with at least one second trubocompressor TC2, wherein the first turbocompressor is calibrated to offer an optimal boost when the vehicle is at the cruise speed, namely between 90 and 120 km/h. Furthermore, said first turbocompressor TC1 of the first group of cylinders comprises bypass means B3/WG1 with a Wastegate valve WG1, which connect a point downstream of the turbine T1 of the first turbocompressor TC to one or more turbines T2 and/or T3 of the second TC2 and/or third turbocompressor TC3 of the second group of cylinders C2.

With "turbocompressor of the first (second) group of cylinders" we mean that said turbocompressor exclusively supercharges said first (second) group of cylinders, because of the complete separation of the intake and exhaust manifolds.

This connection to the turbine or turbines of the second group of cylinders is made so as to assist the start-up thereof. According to the invention, there are provided at least two possible alternatives.

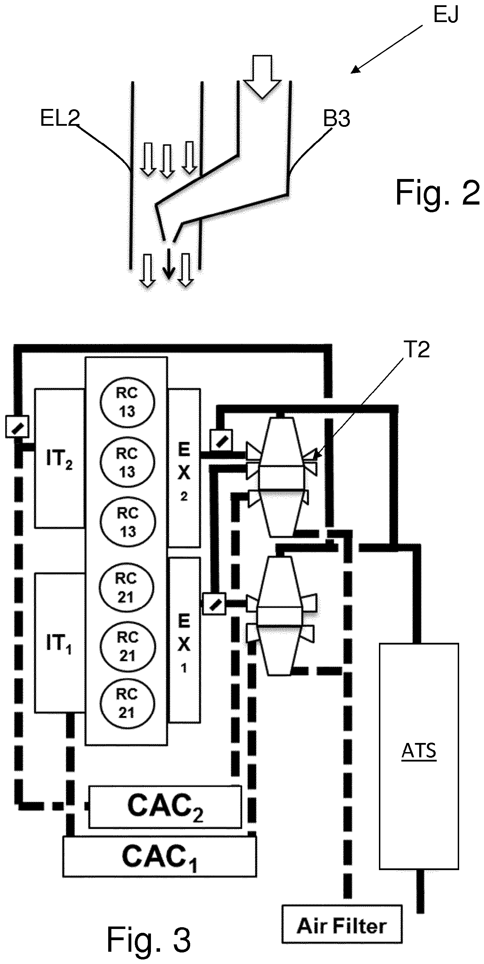

According to a first alternative, said bypass means are connected downstream of the turbine or turbines T2/T3 of the second group of cylinders according to an ejection device, better shown in figure 2, which generates a depression downstream of said turbines, thus assisting them in the relative start-up.

According to a second alternative, at least T2 or one of the turbines T2/T3 of the second group of cylinders is an asymmetrical twin-scroll turbine, with the bypass means B3 connected to the smaller scroll, which means that the bypass means are connected upstream of the asymmetrical twin-scroll turbine, see figure 3.

Since the first turbocompressor is calibrated for the operation point that is typical for the cruise speed, when a greater power is requested to the engine, the so-called turbo-matching, the control/calibration of the Wastegate valve WG1 is such as to determine an opening thereof, which causes a portion of exhaust gas produced by the first group of cylinders to bypass the turbine T1, thus supplying - or anyway assisting the start-up of - the turbine T2 and/or T3 with an almost complete elimination of the turbolag. Subsequently, the second group of cylinders is supplied/activated, finding that the relative turbine/s have already reduced their transients.

When, in transient conditions, said second group of cylinders is not active and a power value required to the engine entails activation also of the second group of cylinders, the following steps are performed:
- increment of the fuel injected into the first group of cylinders up to a predefined torque level,
- opening of a respective Wastegate valve of said first supercharging device with consequent directing of the exhaust gases expelled from said Wastegate valve towards said second supercharging device so as to facilitate activation thereof in rotation and
- activation of the second group of cylinders.

According to a preferred variant of the invention, the first group of cylinders has a compression ratio that is different from a compression ratio of the second group of cylinders.

By compression ratio we can mean both the geometric compression ratio, given by the ratio of the volumes when the piston respectively is in the bottom dead centre and in the top dead centre, and the actual compression ratio, which can take into account particular opening and/or closing angles of the intake valves. As a matter of fact, an early or delayed closing thereof determines a smaller charge volume in the cylinder, with a lower actual compression ratio.

Preferably, the compression ratio of the first group of cylinders C1 is greater than the compression ratio of the second group of cylinders C2.

Advantageously, the first group of cylinders has an especially economic operation at low and medium loads, which basically means when the vehicle moves at a cruise speed.

Vice versa, the second group of cylinders, with a smaller compression ratio, is capable of expressing a better efficiency at high loads, which means in transient states, during the accelerations of the vehicles.

The first group of cylinders can have a different power compared to the second group of cylinders.

The engine preferably comprises a fuel injection system (not shown) for supplying the first and second group of cylinders, wherein a fuel injection regulation relative to the first group of cylinders is different from a fuel injection regulation relative to the second group of cylinders.

A different injection mapping between the two groups of cylinders can be provided not only in static terms, but also in dynamic terms, which means that, as the groups are substantially different in terms of maps of specific consumption (BSFC), given a predefined rotation speed and a predefined power level requested, as a whole, to the engine, the two groups of cylinders are fed in such a way that the actual global consumption of the engine is minimised. This implies that, at the same predefined rotation speed, the feeding maps of the two groups of cylinders can drastically vary so as to minimise the consumption of the entire engine. In other words, this is about solving a linear programming method either according to the simplex method or according to other methods, among which there are the Fourier methods.

Furthermore, this regulation of the injection can be differentiated also in terms of injection timing advance relative to the top dead centre. As a matter of fact, an injection timing advance of the second group of cylinders, when it has a smaller compression than the first group of cylinders, is preferably greater than the timing advance of the first group of cylinders.

According to the preferred variants shown in the figures, the first group of cylinders has an intake manifold IT1, called "first manifold", and the second group of cylinders has a respective intake manifold IT2, called "second manifold", so that said first and second manifold are mutually separate from each other.

Preferably, the first supercharging device TC1, besides being calibrated to offer the maximum boost at the cruise speed of the vehicle, is calibrated to offer a supercharging pressure that is generally lower than the one of said second supercharging device TC2.

According to a preferred variant of the invention, which can be combined with the previous ones, the engine E comprises first bypass means B1 for connecting a point of the exhaust line EL1, downstream of the turbine TC1 and/or - if necessary - of the power turbine PT, to said second intake manifold IT2, and wherein said bypass means B1 are configured, by means of a relative valve V1, to cut in when said second group of cylinders is not active, so as to circulate exhaust gas produced by the first group of cylinders C1 through the second group of cylinders C2. Since the first bypass means are active when the second group of cylinders is not active, we are not dealing with exhaust gas recirculation EGR as it is known, because the aim is not that of reducing NOx, but that of preventing fresh air pumped by the second group of cylinders from reaching the pollutant reduction devices generally indicated with ATS (After Treatment System). This is the reason why they were called bypass means and not recirculation means, as they bypass part of the first exhaust line EL1.

In the accompanying figures, the exhaust lines of the two groups of cylinders EL1, EL2 converge in a common ATS, but the principle described herein applies also in case of two distinct after treatment systems for each group of cylinders.

Similarly, both intake lines IL1 and IL2 can branch off from a common air filter or from separate and independent filters.

The expressions "downstream" and "upstream" take into account the circulation of exhaust gases, when they are referred to the (continuous) exhaust lines EL1 and EL2, and the circulation of fresh air, when they are referred to the (broken) intake lines IL1 and IL2.

Furthermore, as to the point of connection of the first bypass means B1, the turbine (T1, T2, T3, PT) or turbines mentioned above can be groups of turbocompressors (T1, T2, T3) or "compound" turbines also known as "power turbines" (PT), as they have an axis that is operatively connected to the drive shaft.

According to a further preferred variant of the invention, which can be combined with the previous ones, the engine further comprises second bypass means B2 to connect an inlet to a respective outlet of a respective compressor CP2 of said second supercharging device TC2, through a relative valve V2, and wherein said second bypass means are active when said first bypass means are also active and vice versa, so as to prevent the respective second turbine T2 of the second turbocompressor TC2 from offering resistance to the passage of the exhaust gases produced by the first group of cylinders and recirculated through the second group of cylinders. Alternatively, the second turbine T2 comprises relative fourth bypass means B4 with a relative Wastegate valve WG2 arranged on said bypass means B4 and said valve WG2 is, for example, a three-way valve and can be controlled to completely bypass the turbine T2 of the second supercharging device TC2 when the second group of cylinders is not active. The aim is that of avoiding offering resistance to the passage of the exhaust gases coming from the second group of cylinders due to the - useless - pumping work that would be carried out by the relative compressor CP2 of the second turbocompressor TC2. The first valve V1 can be a three-way valve alternatively connecting the first exhaust manifold EX1 or the second intake line IL2 to the second intake manifold IT2.

Both intake lines IL1 and IL2, as shown on figure 1, can each comprise an intercooler to cool down the compressed fresh air. Preferably, the intercooler of the first group of cylinders CAC1 is an air/air intercooler, whereas the intercooler CAC2 of the second group of cylinders C2 is a air/liquid intercooler, wherein by liquid we mean both the cooling water of the engine or a carrier fluid of an exchange circuit that is independent of the engine water cooling system.

The solution of figure 3 is substantially identical to the solution of figure 1 except for two aspects:
- There are no second bypass means B2 of the compressor CP2, which, as already mentioned above, can be avoided through proper measures to be taken on the Wastegate valve WG2 so as to avoid any resistance to the passage of exhaust gases produced by the first group of cylinders and circulated through the second group of cylinders,
- There is not the ejection system EJ shown in figure 1, but the turbine T2 of the second supercharging device TC2 is an asymmetrical twin-scroll turbine and the third bypass means B3, controlled through the first Wastegate valve WG1 of the turbine T1 of the first supercharging device, are operatively connected to the relatively smaller scroll of the asymmetrical twin-scroll turbine, whereas the relatively larger scroll is connected to the exhaust manifold of the second group of cylinders.

It is known that twin-scroll turbines have two separate inlets.

Figure 3 shows a further preferred variant of the invention, in which the second group of cylinders is provided not only with a first supercharging stage defined by the second turbocompressor TC2, but also with a second supercharging stage in cascade with the first one defined by the third turbocompressor TC3.

As you can see in figure 3, the intercoolers CAC1, CAC2, CAC3 are air/air intercoolers, but this does not exclude that one or more of them can be air/water intercoolers, as described above.

The solution of figure 5 differs from the other variants described above because of the fact that the exhaust gas of the first group of cylinders C1 flows through the turbine T1 and, subsequently, is also led to a power turbine PT. The power turbine PT is preferably arranged downstream of the turbine T1 of the supercharging stage.

Figure 5 shows, furthermore:
- EGR means - this time used to reduce NOx - which connect the exhaust manifold EX1 of the first group of cylinders C1 to the relative intake manifold IT1, the recirculation duct can comprise a cooler for the exhaust gases recirculated,
- fifth bypass means B5, with a relative control valve V5, to bypass the first supercharging stage TC1 in favour of the operation of the power turbine.

Both these technical detail can be implemented in any of the previous variants.

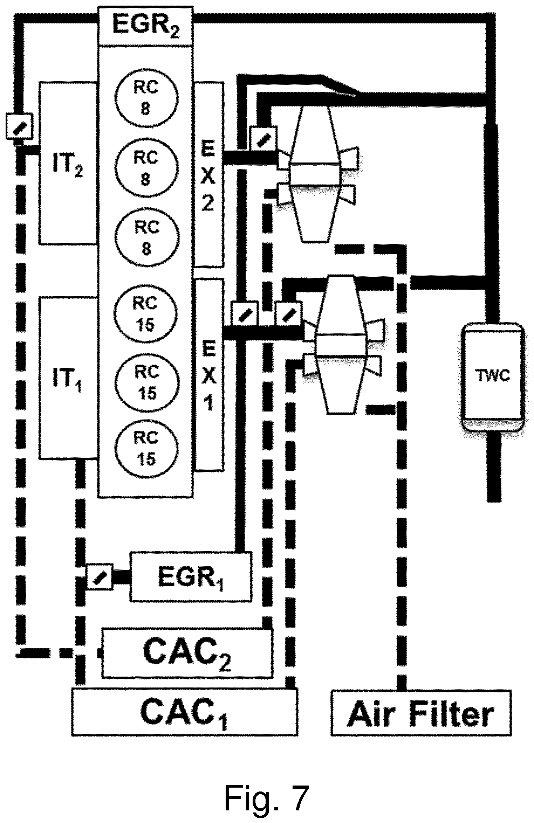

The comparison between figure 6a and figure 6b explains that the ATS according to a preferred variant of the invention comprises a DOC (Diesel Oxidation Cat), a diesel particulate filter (DPF), a SCR (Selective Catalyst Reduction) and a CUC (Clean Up Catalyst), in the hypothesis that the engine, as a whole, is a Diesel cycle engine. The invention can also be implemented in Otto cycle engines. The diagram of figure 7 shows a variant that is particularly suited for petrol engines. In particular, not only there is a TWC (three way catalyst), but, in case you wanted to implement the aforesaid first bypass means B1/V1, you should preferably also insert a cooler, for example an air/water or air/air cooler, to cool down the exhaust gases produced by the first group of cylinders and introduced into the second one, so as to avoid damaging the engine due to the high temperatures reached.

Figure 6 shows an actual EGR for the first group of cylinders and figure 1 shows the ejection system schematically represented in figure 2 for the purposes described above. It should be clear that these details can be left out.

As to the controlling of an internal combustion engine according to any one of the variants described above, the method according to the invention comprises a step of acquiring a power value to be delivered and controlling a feeding of said first group of cylinders and said second group of cylinders according to respective specific consumption maps so as to minimise the overall specific consumption of the engine.

Furthermore, the method comprises a further step of deactivating said second group of cylinders when, given a requested power value, the overall specific consumption of the engine is minimised maintaining active only said first group of cylinders. And when, in transient conditions, said second group of cylinders is not active and a required power value entails activation also of the second group of cylinders, the following steps are performed in sequence:
- feeding the first group of cylinders until the respective maximum torque,
- the relative Wastegate valve WG1 of said first supercharging device is controlled to open and
- the exhaust gases of the first group of cylinders expelled from the Wastegate valve are led towards said second supercharging device TC2/TC3 so as to facilitate its activation in rotation;
- activation of the second group of cylinders.

According to the preferred variants of the invention, this facilitation is obtained either by means of the ejection system according to figures 1, 2 and 7 or by means of an asymmetrical twin-scroll turbine T2 of figures 3 - 5.

When the engine is provided with power turbines and with bypass means B5/V5 for bypassing the first turbine T1 in favour of the power turbine, the valve V5 is controlled so as to close before or during the opening of the valve WG1, which then allows the turbine or turbines of the second group of cylinders to reduce its transients.

This invention can be advantageously implemented by means of a computer program comprising coding means for carrying out one or more steps of the method, when the program is executed by a computer. Therefore, the scope of protection is extended to said computer program and, furthermore, to means that can be read by a computer and comprises a recorded message, said means that can be read by a computer comprising coding means for a program for carrying out one or more steps of the method, when the program is executed by a computer.

The non-limiting example described above can be subjected to variations within the scope of the appended claims.

When reading the description above, a skilled person can carry out the subject-matter of the invention without introducing further manufacturing details. The elements and features contained in the different preferred embodiments, drawings included, can be combined with one another, without for this reason going beyond the scope of protection of this patent application. The information contained in the part concerning the state of art only serves the purpose of better understanding the invention and does not represent a declaration of existence of the items described.

## Claims

1. Supercharged internal combustion engine (E) comprising a plurality of cylinders (C1, C2) with relative pistons, connected to a relative common drive shaft, said multitude of cylinders being divided into a first group (C1) and a second group of cylinders (C2), in which consecutive ignition cycles alternate between the two groups of cylinders when both groups of cylinders are active, the first group of cylinders being controlled to be always active, and the second group of cylinders being controlled to be active on demand, the engine comprising a first turbocompressor (TC1) connected so as to exclusively supercharge said first group of cylinders (C1) and at least one second turbocompressor (TC2, TC3) connected so as to exclusively supercharge said second group of cylinders (C1), wherein said first turbocompressor (TC1) comprises first bypass means (B3, WG1) to allow an exhaust gas produced by said first group of cylinders to bypass a relative first turbine and wherein said bypass means are connected to a turbine (T2, T3) of said at least one second turbocompressor (TC2, TC3) to assist start-up of the at least one second turbocompressor (TC2, TC3) before and/or during an activation of said second group of cylinders.

2. Engine according to claim 1, wherein said first bypass means comprise a duct (B3) and a Wastegate valve (WG1) arranged on said duct, and wherein said duct is connected between a point upstream of said first turbine (T1) and a point downstream of said second turbine (TC2, TC3), by means of an ejection system, so as to generate a depression downstream of said second turbine to help said second turbocompressor to reduce its transients.

3. Engine according to claim 1, wherein said second turbine (T2) is of the asymmetric twin-scroll type with one relatively larger scroll pneumatically connected to an outlet manifold of said second group of cylinders and one relatively smaller scroll and wherein said first bypass means comprise a duct (B3) and a Wastegate valve (WG1) arranged on said duct, and wherein said duct is connected between a bridge upstream of said first turbine (T1) and a point upstream of said second relatively smaller scroll of said second turbine (T2).

4. Engine according to any one of the preceding claims, wherein said Wastegate valve (WG1) is controlled/calibrated to open first or during an activation of said second group of cylinders.

5. Engine according to any one of the preceding claims, wherein the compression ratio of said first group of cylinders is greater than the compression ratio of the second group of cylinders.

6. Engine according to one of the preceding claims, wherein said engine comprises a fuel injection system to feed said first and second group of cylinders wherein a fuel injection regulation relative to said first group of cylinders is different from a fuel injection regulation relative to said second group of cylinders.

7. Engine according to claim 6, wherein said regulation comprises making a fuel injection timing advance relative to said first group of cylinders lower than a timing advance relative to said second group of cylinders.

8. Engine according to any one of the preceding claims, wherein said first turbocompressor (TC1) is calibrated to offer a relative maximum boost of the engine at the cruise speeds of a relative vehicle and/or wherein a supercharging pressure of said first turbocompressor (TC1) is lower than a supercharging pressure of said second turbocompressor (TC2, TC3) .

9. Engine according to any one of the preceding claims, wherein said first group of cylinders has a first intake manifold and a first exhaust manifold, both respectively separate from a second intake manifold and a second exhaust manifold of said second group of cylinders, and wherein the engine comprises second bypass means (V1,B1) to connect said first exhaust manifold (EX1) to said second intake manifold (IT2) and wherein said bypass means are configured to cut in when said second group of cylinders is not active and cut out when said second group of cylinders is active.

10. Engine according to any one of the preceding claims, wherein said second turbocompressor (TC2) further comprises third bypass means (V2, B2) to connect an inlet to a respective outlet of a respective compressor (T2), and wherein said third bypass means are active when said second (V1, B1) bypass means are also active.

11. Engine according to any one of the preceding claims, further comprising a power turbine (PT) having a relative axis of rotation operatively connected to said engine drive shaft, and wherein said power turbine is fed only by said first exhaust manifold (EL1).

12. Engine according to claim 11, further comprising fourth bypass means (V5, B5) to bypass at least partially a first turbine (T1) of said first turbocompressor (TC1) in favour of said power turbine (PT).

13. Engine according to any one of the preceding claims, wherein said first group of cylinders has a first intake manifold and a first exhaust manifold, both respectively separate from a second intake manifold and a second exhaust manifold of said second group of cylinders, and wherein said first group of cylinders comprises EGR means adapted to connect said first intake manifold (IT1) to said first exhaust manifold (EX1) to recirculate exhaust gases generated by said first group of cylinders.

14. Method for controlling a supercharged internal combustion engine according to any one of the preceding claims, wherein, when said second group of cylinders is not active, and a power value required to the engine entails activation also of the second group of cylinders, the following steps are performed:
- increment of the fuel injected into the first group of cylinders up to a predefined torque level,
- opening of a respective Wastegate valve (WG1) of said first supercharging device with consequent directing of the exhaust gases expelled from said Wastegate valve towards said second supercharging device so as to facilitate its activation in rotation and then
- activation of the second group of cylinders.

15. Method according to claim 14, wherein when the engine also comprises said fourth bypass means (B5, V5) with a relative valve (B5), then said valve (B5) is controlled in closing while said Wastegate valve (WG1) opens.

16. Method according to any one of the claims 14 or 15, comprising a step of acquiring a power value to be delivered and controlling a feeding of said first group of cylinders and said second group of cylinders according to respective specific consumption maps so as to minimise the overall specific consumption of the engine.

17. Method according to claim 16, further comprising a further step of deactivating said second group of cylinders when, given a required power value, the overall specific consumption of the engine is minimised, maintaining only said first group of cylinders active.

18. Computer program which comprises program coding means adapted to carry out all the steps of the method of any one of the claims from 14 to 17, when said program is run on a computer.

19. Computer-readable medium comprising program coding means adapted to carry out all the steps of the method of any one of the claims from 14 to 17, when said program coding means is run on a computer.

## Patentansprüche

1. Aufgeladene Brennkraftmaschine (E), die mehrere Zylinder (C1, C2) mit jeweiligen Kolben, die mit einer gemeinsamen Antriebswelle verbunden sind, umfasst, wobei die mehreren Zylinder in eine erste Zylindergruppe (C1) und eine zweite Zylindergruppe (C2) unterteilt sind, wobei aufeinander folgende Zündzyklen zwischen den beiden Zylindergruppen abwechseln, wenn beide Zylindergruppen aktiv sind, wobei die erste Zylindergruppe so gesteuert wird, dass sie stets aktiv ist, während die zweite Zylindergruppe so gesteuert wird, dass sie auf Anforderung aktiv ist, wobei die Kraftmaschine einen ersten Turboverdichter (TC1), der so angeschlossen ist, dass er ausschließlich die erste Zylindergruppe (C1) auflädt, und wenigstens einen zweiten Turboverdichter (TC2, TC3), der so angeschlossen ist, dass er ausschließlich die zweite Zylindergruppe (C2) auflädt, umfasst, wobei der erste Turboverdichter (TC1) erste Umgehungsmittel (B3, WG1) umfasst, um zu ermöglichen, dass Abgas, das durch die erste Zylindergruppe erzeugt wird, eine damit in Beziehung stehende erste Turbine umgeht, und wobei die Umgehungsmittel an eine Turbine (T2, T3) des wenigstens einen zweiten Turboverdichters (TC2, TC3) angeschlossen ist, um ein Hochfahren des wenigstens einen zweiten Turboverdichters (TC2, TC3) vor und/oder während einer Aktivierung der zweiten Zylindergruppe zu unterstützen.

2. Kraftmaschine nach Anspruch 1, wobei die ersten Umgehungsmittel einen Stutzen (B3) und ein Ladedruckregelventil (WG1), das an dem Stutzen angeordnet ist, umfassen und wobei der Stutzen zwischen einem Punkt stromaufseitig der ersten Turbine (T1) und einem Punkt stromabseitig der zweiten Turbine (TC2, TC3) mittels eines Ausstoßsystems angeschlossen ist, um so stromabseitig der zweiten Turbine einen Unterdruck zu erzeugen, um den zweiten Turboverdichter bei der Verringerung seiner Instabilitäten zu unterstützen.

3. Kraftmaschine nach Anspruch 1, wobei die zweite Turbine (T2) vom Typ mit asymmetrischer Doppelspirale ist, wobei eine relativ größere Spirale mit einem Auslasskrümmer der zweiten Zylindergruppe und mit einer relativ kleineren Spirale drucktechnisch verbunden ist und wobei die ersten Umgehungsmittel einen Stutzen (B3) und ein Ladedruckregelventil (WG1), das an dem Stutzen angeordnet ist, umfassen und wobei der Stutzen zwischen einer Brücke stromaufseitig der ersten Turbine (T1) und einem Punkt stromaufseitig der zweiten relativ kleineren Spirale der zweiten Turbine (T2) angeschlossen ist.

4. Kraftmaschine nach einem der vorhergehenden Ansprüche, wobei das Ladedruckregelventil (WG1) so gesteuert/kalibriert wird, dass es vor oder während der Aktivierung der zweiten Zylindergruppe öffnet.

5. Kraftmaschine nach einem der vorhergehenden Ansprüche, wobei das Verdichtungsverhältnis der ersten Zylindergruppe größer als das Verdichtungsverhältnis der zweiten Zylindergruppe ist.

6. Kraftmaschine nach einem der vorhergehenden Ansprüche, wobei die Kraftmaschine ein Kraftstoffeinspritzsystem umfasst, um die erste und die zweite Zylindergruppe zu versorgen, wobei eine Kraftstoffeinspritzregulierung in Bezug auf die erste Zylindergruppe von einer Kraftstoffeinspritzregulierung in Bezug auf die zweite Zylindergruppe verschieden ist.

7. Kraftmaschine nach Anspruch 6, wobei die Regulierung bewirkt, dass eine Kraftstoffeinspritzzeit-Voreilung in Bezug auf die erste Zylindergruppe geringer ist als eine zeitliche Voreilung in Bezug auf die zweite Zylindergruppe.

8. Kraftmaschine nach einem der vorhergehenden Ansprüche, wobei der erste Turboverdichter (TC1) so kalibriert wird, dass er eine relative maximale Verstärkung der Kraftmaschine bei Dauergeschwindigkeiten des entsprechenden Fahrzeugs bietet, und/oder wobei ein Ladedruck des ersten Turboverdichters (TC1) niedriger als ein Ladedruck des zweiten Turboverdichters (TC2, TC3) ist.

9. Kraftmaschine nach einem der vorhergehenden Ansprüche, wobei die erste Zylindergruppe einen ersten Einlasskrümmer und einen ersten Auslasskrümmer besitzt, die beide von einem zweiten Einlasskrümmer bzw. einem zweiten Auslasskrümmer der zweiten Zylindergruppe getrennt sind, und wobei die Kraftmaschine zweite Umgehungsmittel (V1, B1) umfasst, um den ersten Auslasskrümmer (EX1) mit dem zweiten Einlasskrümmer (IT2) zu verbinden, und wobei die Umgehungsmittel konfiguriert sind, einzugreifen, wenn die zweite Zylindergruppe nicht aktiv ist, und nicht einzugreifen, wenn die zweite Zylindergruppe aktiv ist.

10. Kraftmaschine nach einem der vorhergehenden Ansprüche, wobei der zweite Turbokompressor (TC2) ferner dritte Umgehungsmittel (V2, B2) umfasst, um einen Einlass mit einem entsprechenden Auslass eines entsprechenden Verdichters (T2) zu verbinden, und wobei die dritten Umgehungsmittel aktiv sind, wenn die zweiten Umgehungsmittel (V1, B1) ebenfalls aktiv sind.

11. Kraftmaschine nach einem der vorhergehenden Ansprüche, die ferner eine Leistungsturbine (PT) umfasst, die eine entsprechende Drehachse besitzt, die mit der Kraftmaschinenantriebswelle betriebstechnisch verbunden ist, und wobei die Leistungsturbine nur durch den ersten Auslasskrümmer (EL1) versorgt wird.

12. Kraftmaschine nach Anspruch 11, die ferner vierte Umgehungsmittel (V5, B5) umfasst, um eine erste Turbine (T1) des ersten Turboverdichters (TC1) zugunsten der Leistungsturbine (PT) wenigstens teilweise zu umgehen.

13. Kraftmaschine nach einem der vorhergehenden Ansprüche, wobei die erste Zylindergruppe einen ersten Einlasskrümmer und einen ersten Auslasskrümmer besitzt, die beide von einem zweiten Einlasskrümmer bzw. einem zweiten Auslasskrümmer der zweiten Zylindergruppe getrennt sind, und wobei die erste Zylindergruppe AGR-Mittel umfasst, die dafür ausgelegt sind, den ersten Einlasskrümmer (IT2) mit dem ersten Auslasskrümmer (EX1) zu verbinden, um Abgase, die durch die erste Zylindergruppe erzeugt werden, zurückzuführen.

14. Verfahren zum Steuern einer aufgeladenen Brennkraftmaschine nach einem der vorhergehenden Ansprüche, wobei dann, wenn die zweite Zylindergruppe nicht aktiv ist und ein von der Kraftmaschine geforderter Leistungswert eine Aktivierung der zweiten Zylindergruppe erfordert, die folgenden Schritte ausgeführt werden:
- Inkrementieren des in die erste Zylindergruppe eingespritzten Kraftstoffs auf einen im Voraus definierten Drehmomentpegel,
- Öffnen eines entsprechenden Ladedruckregelventils (WG1) der ersten Ladevorrichtung mit folgerichtigem Lenken der Abgase, die aus dem Ladedruckregelventil ausgestoßen werden, zu der zweiten Ladevorrichtung, um deren rotatorische Aktivierung zu erleichtern, und dann
- Aktivieren der zweiten Zylindergruppe.

15. Verfahren nach Anspruch 14, wobei dann, wenn die Kraftmaschine außerdem vierte Umgehungsmittel (B5, V5) mit einem zugehörigen Ventil (B5) umfasst, dieses Ventil (B5) in seine Schließstellung gesteuert wird, wenn das Ladedruckregelventil (WG1) öffnet.

16. Verfahren nach einem der Ansprüche 14 oder 15, das den Schritt des Erfassens eines auszugebenden Leistungswerts und das Steuern einer Versorgung der ersten Zylindergruppe und der zweiten Zylindergruppe in Übereinstimmung mit jeweiligen bestimmten Verbrauchskennfeldern umfasst, um den gesamten bestimmten Verbrauch der Kraftmaschine zu minimieren.

17. Verfahren nach Anspruch 16, das ferner einen weiteren Schritt des Deaktivierens der zweiten Zylindergruppe umfasst, wenn bei einem gegebenen erforderlichen Leistungswert der gesamte bestimmte Verbrauch der Kraftmaschine minimiert wird, wobei nur die erste Zylindergruppe aktiv gehalten wird.

18. Computerprogramm, das Programmcodemittel enthält, die dafür ausgelegt sind, sämtliche Schritte des Verfahrens nach einem der Ansprüche 14 bis 17 auszuführen, wenn das Programm auf einem Computer läuft.

19. Computerlesbares Medium, das Programmcodemittel enthält, die dafür ausgelegt sind, sämtliche Schritte des Verfahrens nach einem der Ansprüche 14 bis 17 auszuführen, wenn die Programmcodemittel auf einem Computer laufen.

## Revendications

1. Moteur à combustion interne suralimenté (E) comprenant une pluralité de cylindres (C1, C2) avec des pistons relatifs, reliés à un arbre d'entraînement commun relatif, ladite multitude de cylindres étant divisée en un premier groupe (C1) et un second groupe de cylindres (C2), dans lesquels des cycles d'allumage consécutifs alternent entre les deux groupes de cylindres lorsque les groupes de cylindres sont tous deux actifs, le premier groupe de cylindres étant commandé pour être toujours actif, et le second groupe de cylindres étant commandé pour être actif à la demande, le moteur comprenant un premier turbocompresseur (TC1) relié de manière à suralimenter exclusivement ledit premier groupe de cylindres (C1) et au moins un deuxième turbocompresseur (TC2, TC3) relié de manière à suralimenter exclusivement ledit second groupe de cylindres (C1), dans lequel ledit premier turbocompresseur (TC1) comprend des premiers moyens de contournement (B3, WG1) pour permettre à un gaz d'échappement produit par ledit premier groupe de cylindres de contourner une première turbine relative et dans lequel lesdits moyens de contournement sont reliés à une turbine (T2, T3) dudit au moins un deuxième turbocompresseur (TC2, TC3) pour assister au démarrage de l'au moins un deuxième turbocompresseur (TC2, TC3) avant et/ou pendant une activation dudit second groupe de cylindres.

2. Moteur selon la revendication 1, dans lequel lesdits premiers moyens de contournement comprennent un conduit (B3) et une soupape de décharge (WG1) agencée sur ledit conduit, et dans lequel ledit conduit est relié entre un point en amont de ladite première turbine (T1) et un point en aval de ladite seconde turbine (TC2, TC3), au moyen d'un système d'éjection, de manière à générer une dépression en aval de ladite seconde turbine pour aider ledit deuxième turbocompresseur à réduire ses transitoires.

3. Moteur selon la revendication 1, dans lequel ladite seconde turbine (T2) est du type à double volute asymétrique avec une volute relativement plus large reliée de manière pneumatique à un collecteur de sortie dudit second groupe de cylindres et une volute relativement plus petite et dans lequel lesdits premiers moyens de contournement comprennent un conduit (B3) et une soupape de décharge (WG1) agencée sur ledit conduit, et
dans lequel ledit conduit est relié entre un pont en amont de ladite première turbine (T1) et un point en amont de ladite seconde volute relativement plus petite de ladite seconde turbine (T2).

4. Moteur selon l'une quelconque des revendications précédentes, dans lequel ladite soupape de décharge (WG1) est commandée/étalonnée pour s'ouvrir en premier ou lors d'une activation dudit second groupe de cylindres.

5. Moteur selon l'une quelconque des revendications précédentes, dans lequel le taux de compression dudit premier groupe de cylindres est supérieur au taux de compression du second groupe de cylindres.

6. Moteur selon l'une quelconque des revendications précédentes, dans lequel ledit moteur comprend un système d'injection de carburant pour alimenter lesdits premier et second groupes de cylindres, dans lequel une régulation d'injection de carburant par rapport audit premier groupe de cylindres est différente d'une régulation d'injection de carburant par rapport audit second groupe de cylindres.

7. Moteur selon la revendication 6, dans lequel ladite régulation comprend le fait de rendre une avance de calage d'injection de carburant par rapport audit premier groupe de cylindres inférieure à une avance de calage par rapport audit second groupe de cylindres.

8. Moteur selon l'une quelconque des revendications précédentes, dans lequel ledit premier turbocompresseur (TC1) est étalonné pour offrir une suralimentation maximale relative du moteur aux vitesses de croisière d'un véhicule relatif et/ou dans lequel une pression de suralimentation dudit premier turbocompresseur (TC1) est inférieure à une pression de suralimentation dudit deuxième turbocompresseur (TC2, TC3) .

9. Moteur selon l'une quelconque des revendications précédentes, dans lequel ledit premier groupe de cylindres a un premier collecteur d'admission et un premier collecteur d'échappement, tous deux respectivement séparés d'un second collecteur d'admission et d'un second collecteur d'échappement dudit second groupe de cylindres, et dans lequel le moteur comprend des deuxièmes moyens de contournement (V1, B1) pour relier ledit premier collecteur d'échappement (EX1) audit second collecteur d'admission (IT2) et dans lequel lesdits moyens de contournement sont configurés pour être enclenchés lorsque ledit second groupe de cylindres n'est pas actif et s'arrêter lorsque ledit second groupe de cylindres est actif.

10. Moteur selon l'une quelconque des revendications précédentes, dans lequel ledit deuxième turbocompresseur (TC2) comprend en outre des troisièmes moyens de contournement (V2, B2) pour relier une entrée à une sortie respective d'un compresseur respectif (T2), et dans lequel lesdits troisièmes moyens de contournement sont actifs lorsque lesdits deuxièmes moyens de contournement (V1, B1) sont également actifs.

11. Moteur selon l'une quelconque des revendications précédentes, comprenant en outre une turbine de puissance (PT) ayant un axe de rotation relatif reliée de manière fonctionnelle audit arbre d'entraînement de moteur, et dans lequel ladite turbine de puissance est alimentée uniquement par ledit premier collecteur d'échappement (EL1).

12. Moteur selon la revendication 11, comprenant en outre des quatrièmes moyens de contournement (V5, B5) pour contourner au moins partiellement une première turbine (T1) dudit premier turbocompresseur (TC1) en faveur de ladite turbine de puissance (PT).

13. Moteur selon l'une quelconque des revendications précédentes, dans lequel ledit premier groupe de cylindres a un premier collecteur d'admission et un premier collecteur d'échappement, tous deux respectivement séparés d'un second collecteur d'admission et d'un second collecteur d'échappement dudit second groupe de cylindres, et dans lequel ledit premier groupe de cylindres comprend des moyens EGR adaptés pour relier ledit premier collecteur d'admission (IT1) audit premier collecteur d'échappement (EX1) pour faire recirculer les gaz d'échappement générés par ledit premier groupe de cylindres.

14. Méthode pour commander un moteur à combustion interne suralimenté selon l'une quelconque des revendications précédentes, dans laquelle, lorsque ledit second groupe de cylindres n'est pas actif, et une valeur de puissance requise pour le moteur entraîne l'activation également du second groupe de cylindres, les étapes suivantes sont effectuées :
- l'augmentation du carburant injecté dans le premier groupe de cylindres jusqu'à un niveau de couple prédéfini,
- l'ouverture d'une soupape de décharge respective (WG1) dudit premier dispositif de suralimentation avec la direction conséquente des gaz d'échappement expulsés de ladite soupape de décharge vers ledit second dispositif de suralimentation de manière à faciliter son activation en rotation et ensuite
- l'activation du second groupe de cylindres.

15. Méthode selon la revendication 14, dans laquelle lorsque le moteur comprend également lesdits quatrièmes moyens de contournement (B5, V5) avec une soupape relative (B5), alors ladite soupape (B5) est commandée en fermeture pendant que ladite soupape de décharge (WG1) s'ouvre.

16. Méthode selon l'une quelconque des revendications 14 ou 15, comprenant une étape d'acquisition d'une valeur de puissance à délivrer et de commande d'une alimentation dudit premier groupe de cylindres et dudit second groupe de cylindres selon des cartes de consommation spécifique respectives de manière à minimiser la consommation spécifique globale du moteur.

17. Méthode selon la revendication 16, comprenant en outre une étape supplémentaire de désactivation dudit second groupe de cylindres lorsque, une valeur de puissance requise étant donnée, la consommation spécifique globale du moteur est minimisée, maintenant actif uniquement ledit premier groupe de cylindres.

18. Programme informatique qui comprend un moyen de codage de programme adapté pour réaliser toutes les étapes de la méthode selon l'une quelconque des revendications 14 à 17, lorsque ledit programme est exécuté sur un ordinateur.

19. Support lisible par ordinateur comprenant un moyen de codage de programme adapté pour réaliser toutes les étapes de la méthode selon l'une quelconque des revendications 14 à 17 lorsque ledit moyen de codage de programme est exécuté sur un ordinateur.
